# EUROPEAN PATENT SPECIFICATION

(11) **EP 3 950 165 B1**
(45) Date of publication and mention of the grant of the patent: **02.08.2023**
(21) Application number: 20780049.1
(22) Date of filing: 26.02.2020
(51) Int. Cl.: B21D 43/12, B21D 43/00, B21D 43/22, B21D 43/24, B65G 57/03, B65G 57/04, B65G 59/04

(54) **CARRY-IN/CARRY-OUT SYSTEM**
BRING-/ABHOLSYSTEM
SYSTÈME D'ENTRÉE/SORTIE

(30) Priority: 25.03.2019 JP 2019056042
(43) Date of publication of application: 09.02.2022
(73) Proprietor: Amada Co., Ltd., Isehara-shi, Kanagawa 259-1196 (JP)
(72) Inventor: OHSAKA, Fumio, Isehara-shi, Kanagawa 259-1196 (JP)
(74) Representative: Grünecker Patent- und Rechtsanwälte PartG mbB
(86) International application number: PCT/JP2020/007608
(87) International publication number: WO 2020/195468

(56) References cited:
- JP-A- H0 751 775
- JP-A- H05 146 933
- JP-A- 2000 117 374
- JP-A- 2001 105 182
- JP-A- 2018 517 573
- US-A- 5 120 178

## Description

### Technical Field

The following disclosure relates to a carry-in/out system that carries in a raw material (sheet plate) to a processing machine such as a punch press, and that carries out a product derived from the raw material and a skeleton as a scrap from the processing machine.

### Background Art

A carry-in/out system is used to perform an automatic operation of a processing machine such as a punch press for a long period of time. Then, a configuration of a conventional carry-in/out system will be briefly described as follows.

On a carry-in/out side of the processing machine, a product collection area for collecting products is formed as a first operation area of the carry-in/out system. On one side of the product collection area in a Y-axis direction that is a horizontal direction, a setup area for making setup for raw materials and the like is formed as a second operation area of the carry-in/out system. On the other side of the product collection area in the Y-axis direction, a one-piece picking-up area for picking up one of raw materials is formed as a third operation area of the carry-in/out system. On the other side of the one-piece picking-up area in the Y-axis direction, a skeleton collection area for collecting skeletons is formed as a fourth area of the carry-in/out system.

The carry-in/out system includes a raw material pallet configured to load raw materials, and the raw material pallet is movable in the Y-axis direction between the one-piece picking-up area and the setup area. The carry-in/out system includes a product pallet configured to collect the products, and the product pallet is movable in the Y-axis direction between the product collection area and the setup area. The carry-in/out system includes a skeleton pallet configured to collect the skeletons, and the skeleton pallet is movable in the Y-axis direction between the skeleton collection area and the setup area.

In the one-piece picking-up area, a one-piece picking-up mechanism is provided to pick up one of the raw materials loaded on the raw material pallet. Also, the carry-in/out system includes a movable table that supports one of the raw material and the skeleton, and the movable table is movable in the Y-axis direction among the product collection area and the one-piece picking-up area and the skeleton collection area.

The carry-in/out system includes a running lifter that is runnable (movable) in the Y-axis direction. The running lifter transfers the raw material pallet in the Y-axis direction between the one-piece picking-up area and the setup area. The running lifter transfers the product pallet in the Y-axis direction between the product collection area and the setup area. The running lifter transfers the skeleton pallet in the Y-axis direction between the skeleton collection area and the setup area.

The carry-in/out system is configured to hold the product pallet at a predetermined height position that does not interfere with the running lifter, when the raw material pallet is transferred in the Y-axis direction between the one-piece picking-up area and the setup area. Also, the carry-in/out system is configured such that when the skeleton pallet is transferred in the Y-axis direction between the skeleton collection area and the setup area, the raw material pallet and the product pallet are held at a predetermined height position that does not interfere with the running lifter.

Patent Literatures 1 to 3 disclose related technologies.
Patent Literature 4 discloses a carry-in/out system according to the preamble of independent claim 1.

### Citation List

### Patent Literature

Patent Literature 1: Japanese Patent Application Laid-Open Publication No. 2010-214420
Patent Literature 2: Japanese Patent Application Laid-Open Publication No. 2001-105064
Patent Literature 3: Japanese Patent Application Laid-Open Publication No. 1998-258938
Patent Literature 4: JP 2001 105182 A

### Summary of the Invention

As described above, in a carry-in/out system, it is necessary to form a setup area, a product collection area, a one-piece picking-up area and a skeleton collection area as operation areas along a Y-axis direction. In other words, in the carry-in/out system, it is necessary to form four operation areas arranged along the Y-axis direction. Therefore, a planar installation space of the carry-in/out system becomes large, which makes it difficult to effectively use a space in a factory.

Further, to make setup (supply) of raw materials, setup (collection) of products, and setup (collection) of skeletons, as described above, the carry-in/out system includes, as a constituent component, a running lifter that transfers a raw material pallet or the like in the Y-axis direction. The running lifter is very expensive, and a hydraulic piping and the like for use in the running lifter move in the Y-axis direction. Consequently, manufacturing cost of the carry-in/out system increases, and maintenance of the carry-in/out system takes time and labor.

That is, there is a problem that it is difficult to reduce the manufacturing cost and maintenance time and labor of the carry-in/out system, while reducing the planar installation space of the carry-in/out system to aim for the effective use of the space in the factory.

To solve the above-described problem, a carry-in/out system that will be disclosed below provides means for reducing operation areas by one and making setup of raw materials and the like without using a running lifter.

The present invention is defined in independent claim 1. Preferred embodiments are laid down in the dependent claims.

### Advantageous Effect of the Invention

A carry-in/out system is capable of reducing manufacturing cost and maintenance time and labor of the carry-in/out system, while reducing a planar installation space to aim for effective use of a space in a factory.

### Brief Description of the Drawings

[Figure 1] Figure 1 is a schematic left side view of a carry-in/out system according to an embodiment.
[Figure 2] Figure 2 is a schematic front view of the carry-in/out system according to the embodiment.
[Figure 3] Figure 3 is a view taken along the III-III line in Figure 1.
[Figure 4] Figure 4 is a schematic plan view of the carry-in/out system according to the embodiment, and does not show a one-piece picking-up mechanism and a movable table.
[Figure 5] Figure 5 is an enlarged view of part V in Figure 1 according to the embodiment.
[Figure 6] Figure 6 is a schematic view illustrating an operation of the carry-in/out system according to the embodiment.
[Figure 7] Figure 7 is a schematic view illustrating the operation of the carry-in/out system according to the embodiment.
[Figure 8] Figure 8 is a schematic view illustrating the operation of the carry-in/out system according to the embodiment.
[Figure 9] Figure 9 is a schematic view illustrating an operation of a carry-in/out system according to another embodiment.
[Figure 10] Figure 10 is a schematic view illustrating the operation of the carry-in/out system according to the other embodiment.
[Figure 11] Figure 11 is a schematic view illustrating the operation of the carry-in/out system according to the other embodiment.

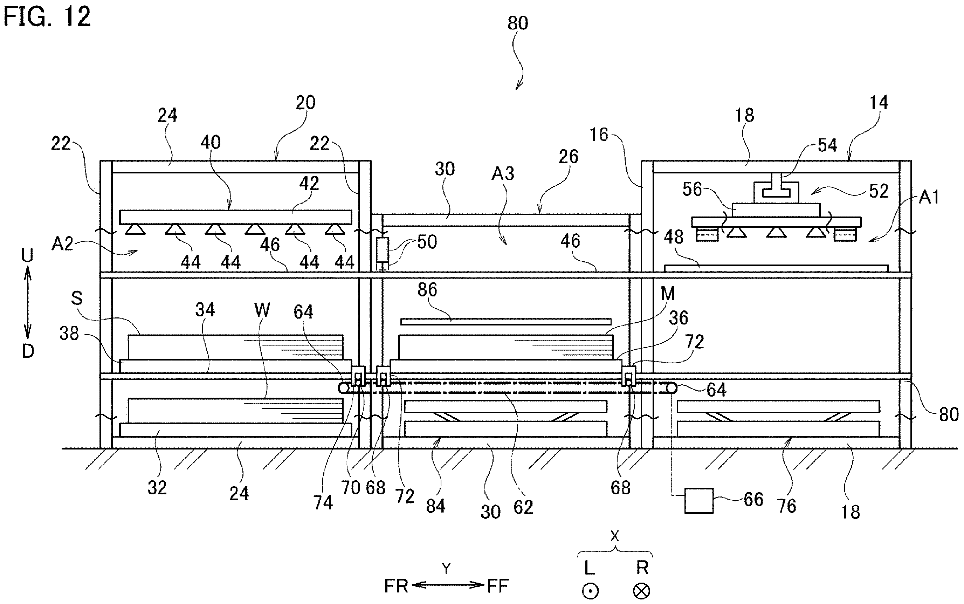

[Figure 12] Figure 12 is a schematic view illustrating the operation of the carry-in/out system according to the other embodiment.

### Description of Embodiments

Hereinafter, several exemplary embodiments will be described with reference to the accompanying drawings.

Note that in description and claims of the present application, "being provided" means being directly provided, and additionally includes being provided indirectly via a separate member. "An X-axis direction" is one of horizontal directions, and is a right-left direction in an embodiment. "A Y-axis direction" is a horizontal direction orthogonal to the X-axis direction, and is a front-rear direction in the embodiment. "Setup of raw materials" includes supply of raw materials. "Setup of products" includes collection of products. "Setup of skeletons" includes collection of skeletons. Also, in the drawings, "FF" indicates a forward direction, "FR" indicates a rearward direction, "L" indicates a leftward direction, "R" indicates a rightward direction, "U" indicates an upward direction, and "D" indicates a downward direction, respectively.

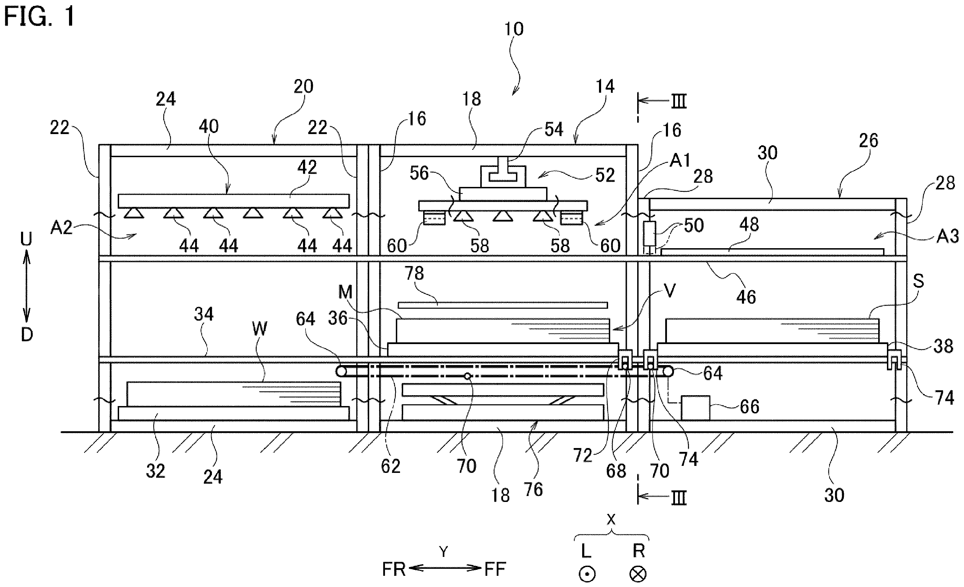

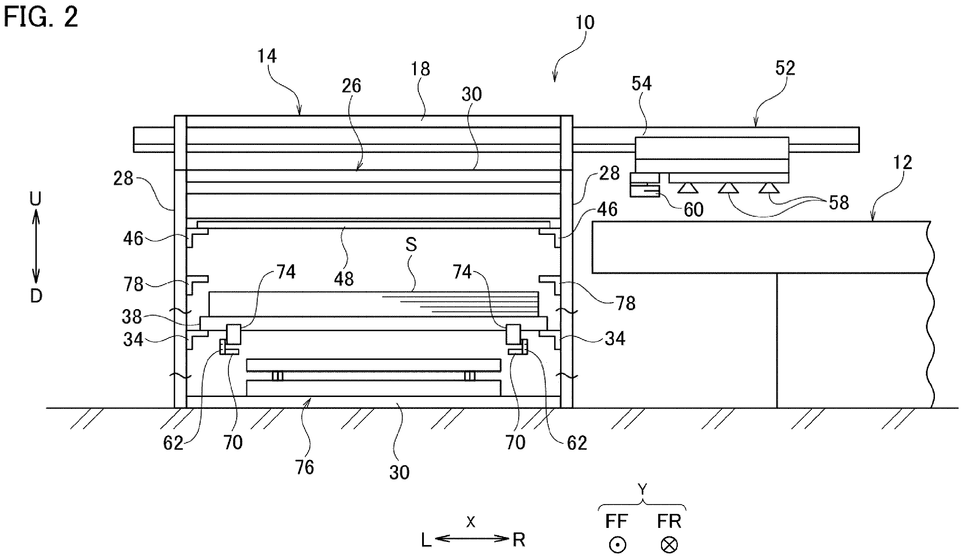

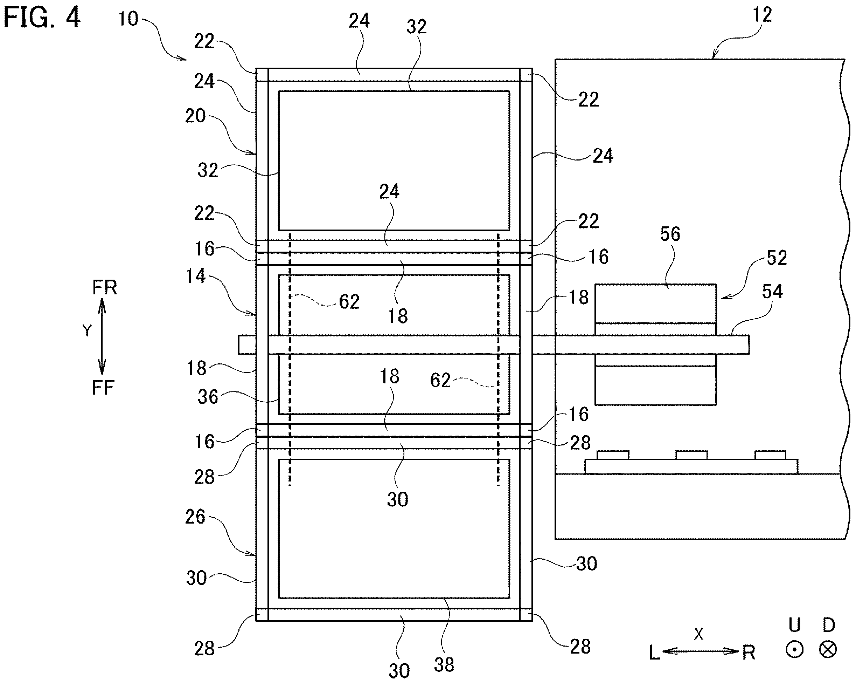

As shown in Figure 1 to Figure 4, a carry-in/out system 10 according to the embodiment is a system that carries in a plate-shaped raw material (sheet plate) W to a punch press 12 as a processing machine, and that carries out a product M derived from the raw material W and a skeleton S as a scrap from the punch press 12. The carry-in/out system 10 is for use in performing an automatic operation of the punch press 12 for a long period of time. Then, a specific configuration of the carry-in/out system 10 is as follows.

On a carry-in/out side (left side) of the punch press 12, a box frame-shaped first fixing frame 14 is provided. The first fixing frame 14 includes a plurality of strut members 16 vertically provided on the carry-in/out side of the punch press 12, and a plurality of beam members 18 each coupled integrally between appropriate strut members 16 and extending in the X-axis direction or the Y-axis direction. Also, in the first fixing frame 14, a product collection area A1 for collecting the products M is formed as a first operation area of the carry-in/out system 10. In other words, the product collection area A1 is formed on the carry-in/out side of the punch press 12.

On one side (rear side) of the first fixing frame 14 in the Y-axis direction, a box frame-shaped second fixing frame 20 is provided. The second fixing frame 20 includes a plurality of strut members 22 vertically provided on the one side of the first fixing frame 14 in the Y-axis direction, and a plurality of beam members 24 each coupled integrally between appropriate strut members 22 and extending in the X-axis direction or the Y-axis direction. Also, in the second fixing frame 20, a setup and one-piece picking-up area A2 for making setup for raw materials W and the like and picking up one of the raw materials W is formed as a second operation area of the carry-in/out system 10. In other words, the product collection area A1 is formed on the one side of the product collection area A1 in the Y-axis direction.

On the other side (front side) of the first fixing frame 14 in the Y-axis direction, a box frame-shaped third fixing frame 26 is provided. In other words, the third fixing frame 26 is provided on the other side (front side) of the second fixing frame 20 in the Y-axis direction. The third fixing frame 26 includes a plurality of strut members 28 vertically provided on the other side of the first fixing frame 14 in the Y-axis direction, and a plurality of beam members 30 each coupled integrally between appropriate strut members 28 and extending in the X-axis direction or the Y-axis direction. Also, in the second fixing frame 20, a skeleton collection area A3 for collecting the skeletons S is formed as a third operation area of the carry-in/out system 10. In other words, the skeleton collection area A3 is formed on the other side of the product collection area A1 in the Y-axis direction.

In a bottom of the setup and one-piece picking-up area A2 in the second fixing frame 20, a raw material loading part 32 configured to load the raw materials is provided. In addition, the raw material loading part 32 may be provided with a raw material pallet (not shown in the drawing) configured to load the raw materials W. In other words, the raw material loading part 32 may be configured to load the raw materials W via the raw material pallet.

A pair of pallet guides 34 extending in the Y-axis direction are provided from a rear end side in the second fixing frame 20 to a front end side in the third fixing frame 26, and the pair of pallet guides 34 are spaced apart in the X-axis direction. Then, the carry-in/out system 10 includes a product pallet 36 configured to collect the products M, and the product pallet 36 in a state of being supported by the pair of pallet guides 34 is movable in the Y-axis direction between the product collection area A1 and the setup and one-piece picking-up area A2. The carry-in/out system 10 includes a skeleton pallet 38 configured to collect the skeletons S, and the skeleton pallet 38 in a state of being supported by the pair of pallet guides 34 is movable in the Y-axis direction between the skeleton collection area A3 and the setup and one-piece picking-up area A2.

Above the raw material loading part 32 in the setup and one-piece picking-up area A2 in the second fixing frame 20, a one-piece picking-up mechanism 40 is provided to pick up one of the raw materials W loaded on the raw material loading part 32. The one-piece picking-up mechanism 40 has a well-known configuration, and includes a pad support member 42 provided to be elevatable and lowerable (movable in an up-down direction) in the second fixing frame 20, and a plurality of suction pads 44 provided in the pad support member 42 and configured to suction an upper surface of the raw material W.

A pair of table guides 46 extending in the Y-axis direction are provided from the rear end side in the second fixing frame 20 to the front end side in the third fixing frame 26, and the pair of table guides 46 are spaced apart in the X-axis direction. The pair of table guides 46 are arranged above the pallet guide 34. The carry-in/out system 10 includes a movable table 48 configured to support one of the raw material W and the skeleton S at a path line (carrying height). The movable table 48 in a state of being supported by the pair of table guides 46 is movable in the Y-axis direction among the product collection area A1 and the setup and one-piece picking-up area A2 and the skeleton collection area A3. A brush (not shown in the drawing) configured to support the raw material W and the like is planted in an upper surface of the movable table 48. The movable table 48 is actuated by a mobile motor (not shown in the drawing) as a table moving actuator provided at an appropriate position of the second fixing frame 20, to move in the Y-axis direction.

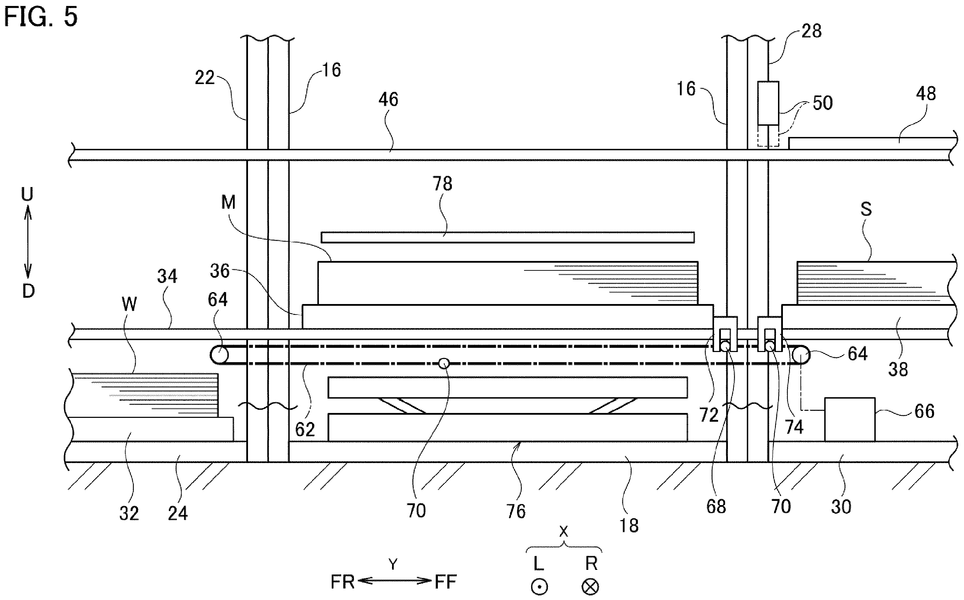

As shown in Figure 1, Figure 2, and Figure 5, a stopper member 50 configured to regulate movement of the skeleton S from the skeleton collection area A3 to the one side in the Y-axis direction (rearward direction) is provided to be elevatable and lowerable at the front side of the first fixing frame 14. The stopper member 50 is formed in a comb tooth shape, and extends in the X-axis direction. The stopper member 50 is driven to elevate and lower by an elevating cylinder (not shown in the drawing) as an elevating actuator provided at an appropriate position of the first fixing frame 14. The stopper member 50 is configured to be switched, by an elevating and lowering operation of the member, between a regulating posture (posture shown by a virtual line in Figure 1 and Figure 5) for regulating the movement of the skeleton S and a retracted posture (posture shown by a solid line in Figure 1 and Figure 5) retracted in the upward direction from a height position of the regulating posture.

As shown in Figure 1 to Figure 4, in the first fixing frame 14, a carry-in/out mechanism 52 is provided to carry in the raw material W to the punch press 12 and to carry out the product M and the skeleton S from the punch press 12, and the carry-in/out mechanism 52 has a well-known configuration (see Patent Literature 2 and Patent Literature 3). The carry-in/out mechanism 52 includes a loader guide 54 provided in the first fixing frame 14, and the loader guide 54 extends in the X-axis direction from the product collection area A1 to a position above the punch press 12. The carry-in/out mechanism 52 includes a takeout loader 56 provided in the loader guide 54 to be movable in the X-axis direction. The takeout loader 56 includes a plurality of suction pads 58 that suction the upper surface of the raw material W and an upper surface of the product M, and a plurality of clamps 60 that grasp an end of the skeleton S. The plurality of suction pads 58 and the plurality of clamps 60 are configured to be elevatable to and lowerable from the loader guide 54.

Subsequently, description will be made as to a configuration for transferring the product pallet 36 and the skeleton pallet 38 in the Y-axis direction and a configuration related thereto.

As shown in Figure 1 to Figure 3 and Figure 5, from a front end side in the second fixing frame 20 to a rear end side in the third fixing frame 26, a pair of endless transfer chains 62 are provided to be circulatable along the Y-axis direction via a plurality of sprockets 64. The pair of transfer chains 62 transfer the product pallet 36 in the Y-axis direction between the product collection area A1 and the setup and one-piece picking-up area A2 and transfer the skeleton pallet 38 in the Y-axis direction between the skeleton collection area A3 and the setup and one-piece picking-up area A2. The pair of transfer chains 62 are spaced apart in the X-axis direction, and located below the path line. Also, the pair of transfer chains 62 are driven by a running motor 66 as a running actuator provided at an appropriate position of the third fixing frame 26, to synchronously circulate.

In each transfer chain 62, a first engaged portion 68 and two second engaged portions 70 are provided with a space therebetween. Further, in a front end portion of the product pallet 36, a pair of U-shaped first hooks 72 are provided to disengageably engage with the first engaged portion 68 of the transfer chain 62 from the upward direction, and the pair of first hooks 72 are spaced apart in the X-axis direction. In a front end portion and a rear end portion of the skeleton pallet 38, a pair of U-shaped second hooks 74 are provided to disengageably engage with the second engaged portions 70 of the transfer chain 62 from the upward direction, respectively, and the pair of second hooks 74 are spaced apart in the X-axis direction.

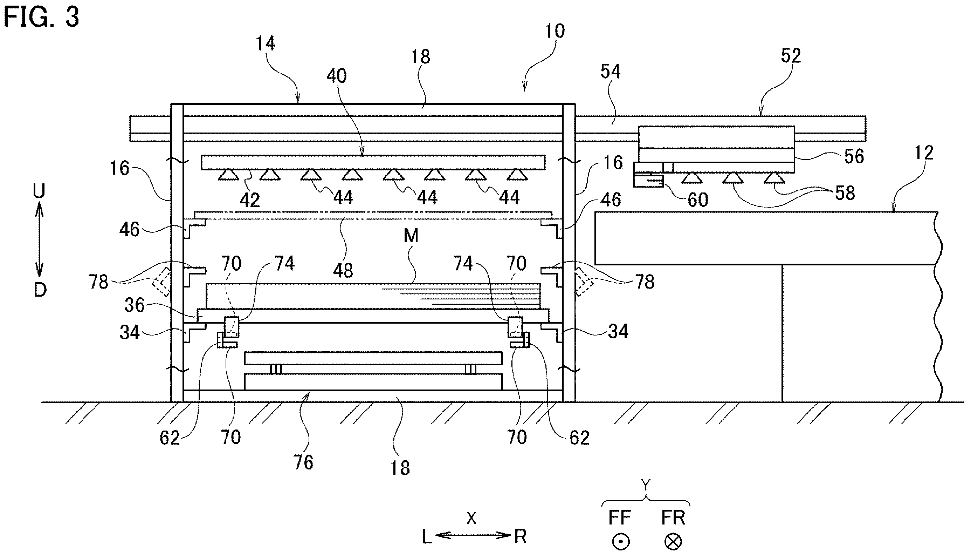

In a bottom of the product collection area A1 in the first fixing frame 14, a fixing lifter 76 is provided to elevate and lower the product pallet 36. The fixing lifter 76 performs an operation of elevating and lowering the product pallet 36 so that each first hook 72 of the product pallet 36 is engaged with and disengaged from the first engaged portion 68 of the transfer chain 62. Also, in the product collection area A1 in the first fixing frame 14, a pair of pallet holding members 78 are provided to hold the product pallet 36 on an upper side of (above) the transfer chain 62. Each pallet holding member 78 extends in the Y-axis direction, and the pair of pallet holding members 78 are spaced apart in the X-axis direction. Each pallet holding member 78 is swingable about a swing center (not shown in the drawing) on a lower part side of the first fixing frame 14. The pair of pallet holding members 78 are configured to be switched, by their swinging operations, between a supporting posture (posture shown with a solid line in Figure 3) for supporting the product pallet 36 and a separated posture (posture shown with a virtual line in Figure 3) with which the members are separated from the supporting posture and from each other in the X-axis direction.

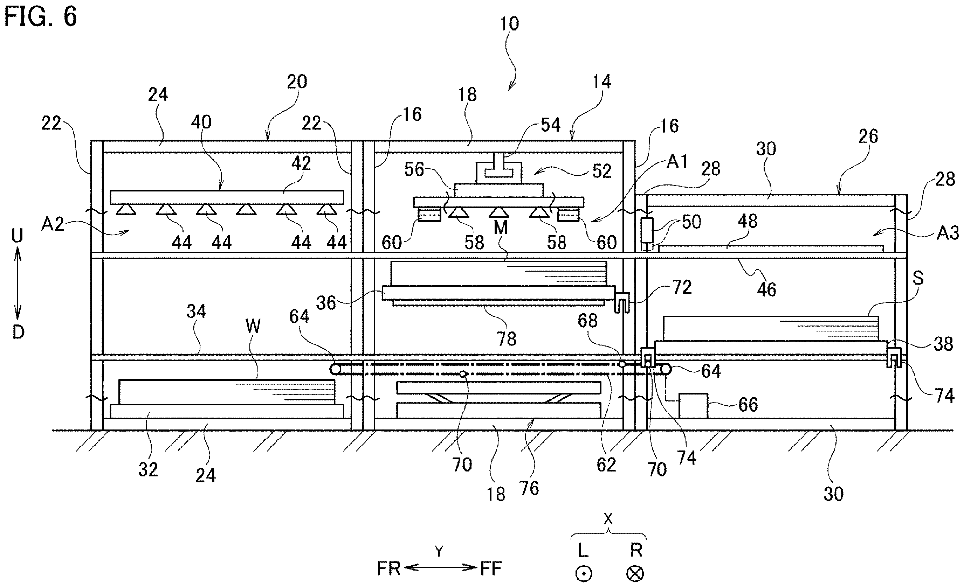

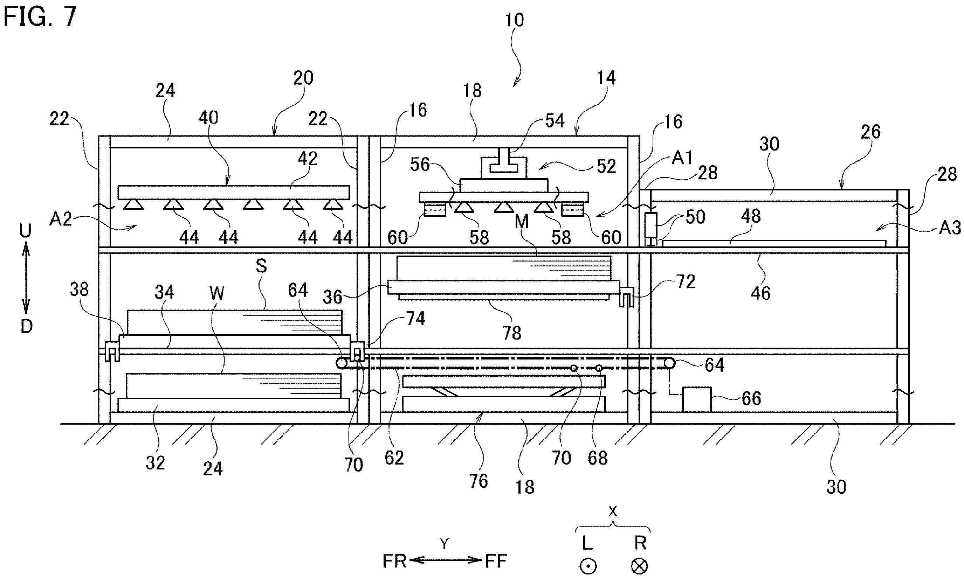

Here, when the skeleton pallet 38 is transferred in the Y-axis direction between the skeleton collection area A3 and the setup and one-piece picking-up area A2, the fixing lifter 76 disengages the first hook 72 of the product pallet 36 from the first engaged portion 68 of the transfer chain 62, and elevates the product pallet 36 to a position above the pallet holding member 78. Then, when the pair of pallet holding members 78 switch from the separated posture to the supporting posture and the fixing lifter 76 lowers the product pallet 36, the product pallet 36 is supported by the pair of pallet holding members 78, and held above the transfer chain 62. That is, as shown in Figure 6 and Figure 7, the carry-in/out system 10 is configured such that when the skeleton pallet 38 is transferred in the Y-axis direction between the skeleton collection area A3 and the setup and one-piece picking-up area A2, the product pallet 36 is disengaged from the transfer chain 62 and held above the transfer chain 62.

Subsequently, description will be made as to an operation of the carry-in/out system 10 according to the embodiment.

The one-piece picking-up mechanism 40 picks up one of the raw materials W by sucking the upper surface of the raw material W loaded on the raw material loading part 32 with the plurality of suction pads 44. Next, the movable table 48 is moved to one side in the Y-axis direction (rearward direction), and located in the setup and one-piece picking-up area A2. Then, a suctioned state by the plurality of suction pads 44 is released, to deliver the raw material W from the one-piece picking-up mechanism 40 to the movable table 48. Furthermore, the movable table 48 is moved to the other side in the Y-axis direction (forward direction), and located in the product collection area A1.

After the movable table 48 is located in the product collection area A1, the upper surface of the raw material W on the movable table 48 is suctioned by the plurality of suction pads 58, and the takeout loader 56 is moved to one side in the X-axis direction (rightward direction). Consequently, the raw material W on the movable table 48 can be carried into the punch press 12, and punching of the raw material W with the punch press 12 can be performed.

In addition, after the raw material W is carried into the punch press 12, the movable table 48 is moved in the Y-axis direction, and located in the setup and one-piece picking-up area A2 or the skeleton collection area A3.

After the punching of the raw material W, the upper surface of the product M is suctioned by the plurality of suction pads 58, and the takeout loader 56 is moved to the other side in the X-axis direction (leftward direction), and located above the product pallet 36 in the product collection area A1. Then, the suctioned state by the plurality of suction pads 58 is released, and accordingly, the product M is dropped from the takeout loader 56 to be collected on the product pallet 36. When the product M is collected on the product pallet 36, the fixing lifter 76 elevates and lowers the product pallet 36, and an collection height of the products M is kept constant.

After the collection of the product M on the product pallet 36, the movable table 48 is moved in the Y-axis direction, and located in the product collection area A1. Next, the end of the scrap S is grasped by the plurality of clamps 60, and the takeout loader 56 is moved to the other side in the X-axis direction, and located above the movable table 48. Then, a grasped state by the plurality of clamps 60 is released, to deliver the skeleton S from the takeout loader 56 to the movable table 48.

After the skeleton S is delivered to the movable table 48, the movable table 48 is moved to the other side in the Y-axis direction, and located in the skeleton collection area A3. Next, the stopper member 50 is switched from the retracted posture to the regulating posture by a lowering operation of the member. Then, the movable table 48 is moved to one side in the Y-axis direction, and allowed to exit from the skeleton collection area A3, and accordingly, the skeleton S is detached from the movable table 48 and collected on the skeleton pallet 38.

In addition, after the collection of the skeleton S on the skeleton pallet 38, the stopper member 50 is switched from the retracted posture from the regulating posture to the retracted posture by an elevating operation of the member.

The above-described operation is repeatedly executed, so that a predetermined number of products M can be collected on the product pallet 36, and a predetermined number of skeletons S can be collected on the skeleton pallet 38.

In a case where the raw material loading part 32 is emptied, as shown in Figure 1, the product pallet 36 is located in the product collection area A1 and the skeleton pallet 38 is located in the skeleton collection area A3. Then, in the setup and one-piece picking-up area A2, setup (supply) of raw materials W is made to the raw material loading part 32.

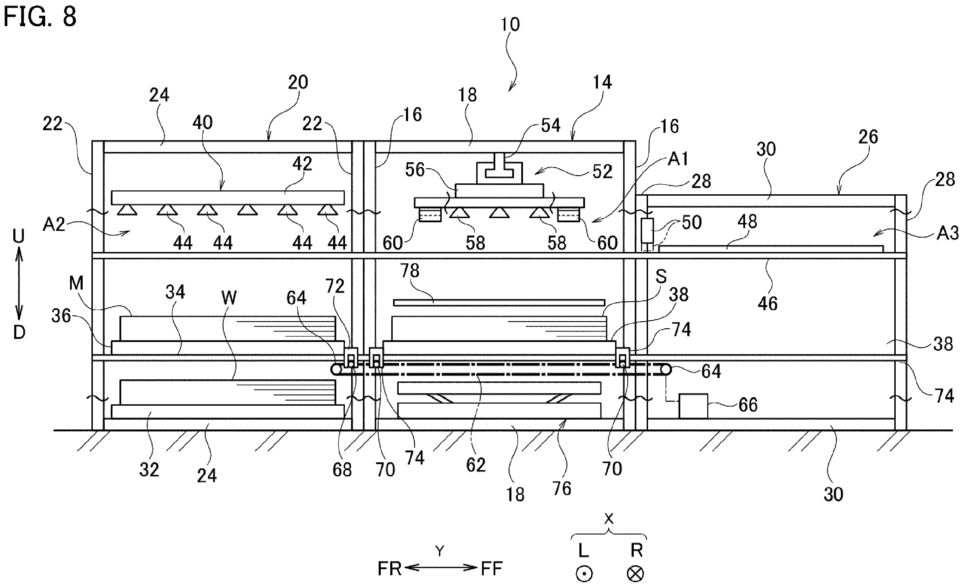

In a case where the predetermined number of products M are collected on the product pallet 36, the running motor 66 is driven to circulate the pair of transfer chains 62 in one direction. Then, as shown in Figure 8, the product pallet 36 is transferred from the product collection area A1 to the setup and one-piece picking-up area A2 and the skeleton pallet 38 is transferred from the skeleton collection area A3 to the product collection area A2. Then, in the setup and one-piece picking-up area A2, setup (collection) of the products M is made to the product pallet 36.

In addition, after the setup of the products M, the running motor 66 is driven to circulate the pair of transfer chains 62 in the other direction, to return the product pallet 36 and the skeleton pallet 38 to original states.

In a case where the predetermined number of skeletons S are collected on the skeleton pallet 38, the fixing lifter 76 disengages the first hook 72 of the product pallet 36 from the first engaged portion 68 of the transfer chain 62, and elevates the product pallet 36 to the position above the pallet holding member 78. Next, the pair of pallet holding members 78 switch from the separated posture to the supporting posture, and the fixing lifter 76 lowers the product pallet 36. Then, as shown in Figure 6, the product pallet 36 is supported by the pair of pallet holding members 78, and held above the transfer chain 62. Furthermore, the running motor 66 is driven to circulate the pair of transfer chains 62 in one direction. Then, as shown in Figure 7, the skeleton pallet 38 is transferred from the skeleton collection area A3 to the setup and one-piece picking-up area A2. Then, in the setup and one-piece picking-up area A2, setup (collection) of the skeletons S is made to the skeleton pallet 38.

In addition, after the setup of the skeletons S, the running motor 66 is driven to circulate the pair of transfer chains 62 in the other direction, to return the skeleton pallet 38 to the original state. Also, the fixing lifter 76 lowers the product pallet 36, and engages the first hook 72 of the product pallet 36 with the first engaged portion 68 of the transfer chain 62, to return the product pallet 36 to the original state.

Subsequently, description will be made as to operations and effects of the embodiment.

As described above, in the carry-in/out system 10, the second operation area corresponds to the setup and one-piece picking-up area A2. Therefore, it is sufficient to form the setup and one-piece picking-up area A2, the product collection area A1, and the skeleton collection area A3 as operation areas in the carry-in/out system 10. In other words, it is sufficient to form three operation areas arranged along the Y-axis direction in the carry-in/out system 10, and the operation areas of the carry-in/out system 10 can be reduced by one.

Also, as described above, the raw material loading part 32 is provided in the setup and one-piece picking-up area A2 that is the second operation area. The carry-in/out system 10 includes the pair of transfer chains 62 that transfer the product pallet 36 and the skeleton pallet 38 in the Y-axis direction. The carry-in/out system 10 is configured such that when the skeleton pallet 38 is transferred in the Y-axis direction between the skeleton collection area A3 and the setup and one-piece picking-up area A2, the product pallet 36 is disengaged from the transfer chain 62 and held above the transfer chain 62. Therefore, the setup (supply) of the raw materials W, the setup (collection) of the products M and the setup (collection) of the skeletons S can be made without using a running lifter.

Therefore, according to the present embodiment, it is possible to reduce manufacturing cost and maintenance time and labor of the carry-in/out system 10, while reducing a planar installation space of the carry-in/out system 10 to aim for effective use of a space in a factory.

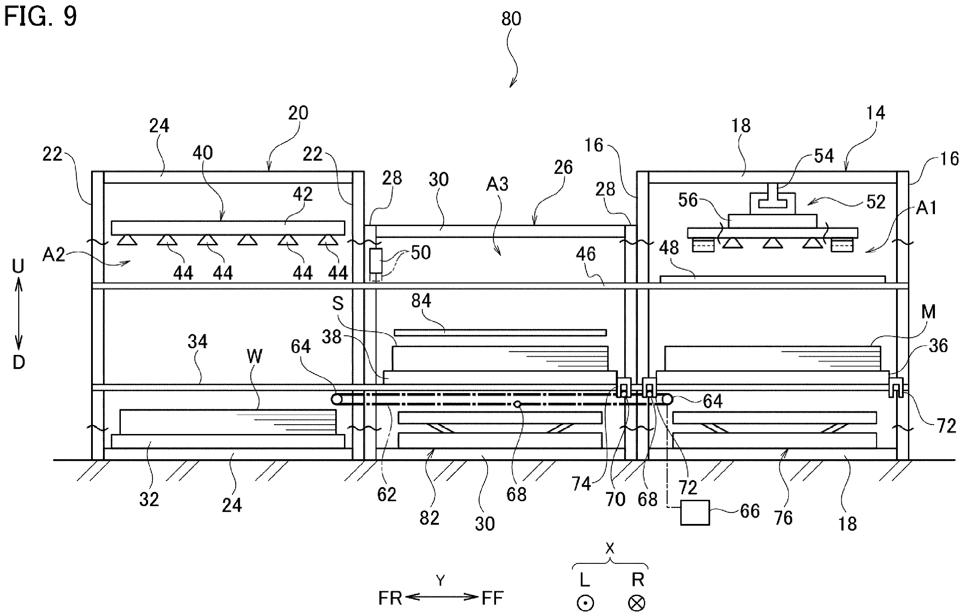

As shown in Figure 9, a carry-in/out system 80 according to another embodiment includes a configuration similar to the carry-in/out system 10 (see Figure 1) according to the above-described embodiment. Then, description will be made only as to respects of the configuration of the plate carry-in/out system 80 that are different from those of the configuration of the carry-in/out system 10.

A third fixing frame is provided on one side (rear side) of a first fixing frame 14 in a Y-axis direction that is the other side (front side) of a second fixing frame 20 in the Y-axis direction. In other words, a skeleton collection area A3 is formed on one side (rear side) of a product collection area A1 in the Y-axis direction that is the other side of a setup and one-piece picking-up area A2 in the Y-axis direction.

A pair of pallet guides 34 are provided from a front end side in the first fixing frame 14 to a rear end side in the second fixing frame 20. A pair of table guides 46 are provided from the front end side in the first fixing frame 14 to the rear end side in the second fixing frame 20. Also, a pair of transfer chains 62 are provided to be circulatable along the Y-axis direction from a rear end side in the first fixing frame 14 to a front end side in the second fixing frame 20. In each transfer chain 62, two first engaged portions 68 and a second engaged portion 70 are provided via a space. Further, a pair of first hooks 72 are provided in a front end portion and a rear end portion of a product pallet 36, respectively, and a pair of second hooks 74 are provided in a front end portion of a skeleton pallet 38.

In a bottom of the skeleton collection area A3 in a third fixing frame 26, a fixing lifter 82 that elevates and lowers the skeleton pallet 38 is provided. The fixing lifter 82 performs an elevating and lowering operation of the skeleton pallet 38 so that the second hooks 74 of the skeleton pallet 38 is engaged with and disengaged from the second engaged portion 70 of the transfer chain 62. Further, instead of providing the carry-in/out system 80 with a pair of pallet holding members 78 (see Figure 1), a pair of pallet holding members 84 are provided to hold the skeleton pallet 38 on an upper side of (above) the transfer chain 62 in the skeleton collection area A3 in the third fixing frame 26. Each pallet holding member 84 extends in the Y-axis direction, and the pair of pallet holding members 84 are spaced apart in an X-axis direction. Each pallet holding member 84 can swing about a swing center (not shown in the drawings) on a lower part side of the third fixing frame 26. The pair of pallet holding members 84 are configured to be switched, by their swing operations, between a supporting posture for supporting the skeleton pallet 38 and a separated posture separated from the supporting posture and from each other in the X-axis direction, in the same manner as in the pair of pallet holding members 78.

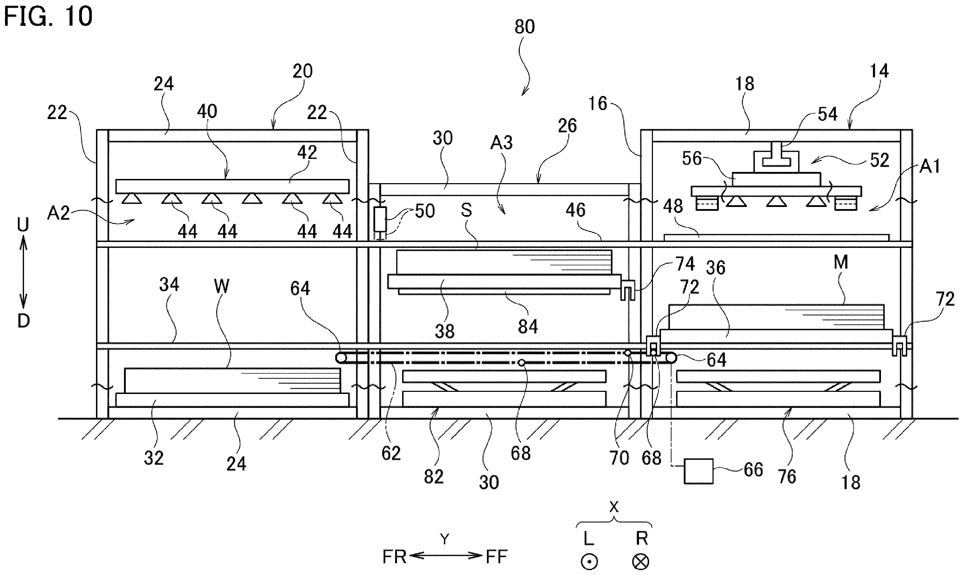

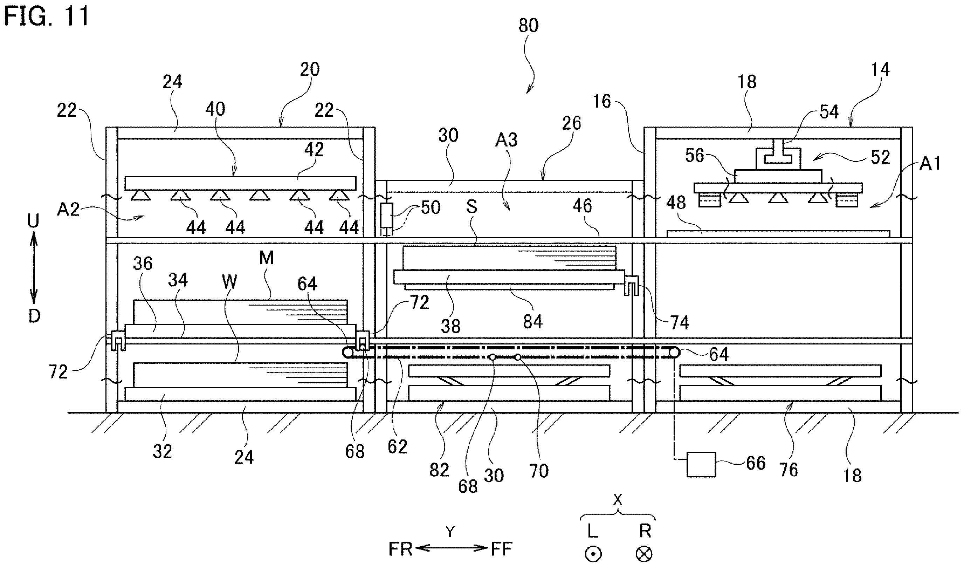

Here, when the product pallet 36 is transferred in the Y-axis direction between the product collection area A1 and the setup and one-piece picking-up area A2, the fixing lifter 82 disengages the second hook 74 of the skeleton pallet 38 from the second engaged portion 70 of the transfer chain 62, and elevates the skeleton pallet 38 to a position above the pallet holding member 84. Then, when the pair of pallet holding members 84 switch from the separated posture to the supporting posture and the fixing lifter 82 lowers the skeleton pallet 38, the skeleton pallet 38 is supported by the pair of pallet holding members 84, and held above the transfer chain 62. That is, as shown in Figure 10 and Figure 11, the carry-in/out system 80 is configured such that when the product pallet 36 is transferred in the Y-axis direction between the product collection area A1 and the setup and one-piece picking-up area A2, the skeleton pallet 38 is disengaged from the transfer chain 62 and held above the transfer chain 62.

Subsequently, description will be made as to an operation of the carry-in/out system 80 according to the other embodiment.

An operation similar to the above-described operation of the carry-in/out system 10 (see Figure 1) is repeatedly executed, so that a predetermined number of products M can be collected on the product pallet 36, and a predetermined number of skeletons S can be collected on the skeleton pallet 38.

In a case where a raw material loading part 32 is emptied, as shown in Figure 9, the product pallet 36 is located in the product collection area A1 and the skeleton pallet 38 is located in the skeleton collection area A3. Then, in the setup and one-piece picking-up area A2, setup (supply) of raw materials W is made to the raw material loading part 32.

In a case where the predetermined number of products M are collected on the product pallet 36, the fixing lifter 82 disengages the second hook 74 of the skeleton pallet 38 from the second engaged portion 70 of the transfer chain 62, and elevates the skeleton pallet 38 to the position above the pallet holding member 84. Next, the pair of pallet holding members 84 switch from the separated posture to the supporting posture, and the fixing lifter 82 lowers the skeleton pallet 38. Then, as shown in Figure 10, the skeleton pallet 38 is supported by the pair of pallet holding members 84, and held above the transfer chain 62. Furthermore, a running motor 66 is driven to circulate the pair of transfer chains 62 in one direction. Then, as shown in Figure 10, the skeleton pallet 38 is transferred from the product collection area A1 to the setup and one-piece picking-up area A2. Then, in the setup and one-piece picking-up area A2, setup (collection) of the products M is made to the product pallet 36.

In addition, after the setup of the products M, the running motor 66 is driven to circulate the pair of transfer chains 62 in the other direction, to return the product pallet 36 to an original state. Also, the fixing lifter 82 lowers the skeleton pallet 38, and engages the second hook 74 of the skeleton pallet 38 with the second engaged portion 70 of the transfer chain 62, to return the skeleton pallet 38 to an original state.

In a case where the predetermined number of skeletons S are collected on the skeleton pallet 38, the running motor 66 is driven to circulate the pair of transfer chains 62 in one direction. Then, as shown in Figure 11, the skeleton pallet 38 is transferred from the skeleton collection area A3 to the setup and one-piece picking-up area A2 and the product pallet 36 is transferred from the product collection area A1 to the skeleton collection area A3. Then, in the setup and one-piece picking-up area A2, setup (collection) of the skeletons S is made to the skeleton pallet 38.

In addition, after the setup of the skeletons S, the running motor 66 is driven to circulate the pair of transfer chains 62 in the other direction, to return the skeleton pallet 38 and the product pallet 36 to the original states.

### Industrial Applicability

A carry-in/out system capable of carrying in a raw material and carrying out a product with less operations and without using a running lifter is provided.

## Claims

1. A carry-in/out system (10) comprising:
a raw material loading part (32) provided in a second operation area (A2) formed on one side of a first operation area (A1) in a Y-axis direction that is a horizontal direction on a carry-in/out side of a processing machine (12), and configured to load a raw material (W);
a product pallet (36) movable in the Y-axis direction between the first operation area (A1) and the second operation area (A2), and configured to collect a product (M) derived from the raw material (W); and
a skeleton pallet (38) movable in the Y-axis direction between a third operation area (A3) formed on another side of the first operation area (A1) in the Y-axis direction and the second operation area (A2), and configured to collect a skeleton (S) as a scrap from the processing machine (12);
**characterized by** comprising:
a one-piece picking-up mechanism (40) provided above the raw material loading part (32) in the second operation area (A2), and configured to pick up one of the raw materials (W) loaded on the raw material loading part (32);
an endless transfer chain (62) circulatable along the Y-axis direction, and configured to transfer the product pallet (36) in the Y-axis direction between the first operation area (A1) and the second operation area (A2) and transfer the skeleton pallet (38) in the Y-axis direction between the third operation area (A3) and the second operation area (A2);
a lifter (76;82) provided in the first operation area (A1) or the third operation area (A3), and configured to elevate and lower the product pallet (36) or the skeleton pallet (38); and
a pallet holding member (78; 84) provided in the first operation area (A1) or the third operation area (A3), and configured to hold the product pallet (36) or the skeleton pallet (38) above the transfer chain (62),
the carry-in/out system (10) being configured such that when the skeleton pallet (38) is transferred in the Y-axis direction between the third operation area (A3) and the second operation area (A2), the product pallet (36) is disengaged from the transfer chain (62) and held above the transfer chain (62), or such that when the product pallet (36) is transferred in the Y-axis direction between the first operation area (A1) and the second operation area (A2), the skeleton pallet (38) is disengaged from the transfer chain (62) and held above the transfer chain (62).

2. The carry-in/out system (10) according to claim 1, wherein
the transfer chain (62) is provided with a first engaged portion (68) and a second engaged portion (70) with a space therebetween, and
the product pallet (36) is provided with a first hook (72) configured to engage with the first engaged portion (68) of the transfer chain (62), and the skeleton pallet (38) is provided with a second hook (74) configured to engage with the second engaged portion (70) of the transfer chain (62).

3. The carry-in/out system (10) according to claim 1 or 2, further comprising:
a movable table (48) movable in the Y-axis direction among the first operation area (A1) and the second operation area (A2) and the third operation area (A3), and configured to support one of the raw material (W) and the skeleton (S); and
a stopper member (50) configured to regulate movement of the skeleton (S) from the third operation area (A3) to one side in the Y-axis direction.

## Patentansprüche

1. Ein-/Ausfördersystem (10), umfassend:
einen Ausgangsmaterial-Ladeteil (32), der in einem zweiten Arbeitsbereich (A2) bereitgestellt ist, der auf einer Seite eines ersten Arbeitsbereichs (A1) in einer Y-Achsenrichtung, welches eine horizontale Richtung ist, auf einer Ein-/Ausförderseite einer Verarbeitungsmaschine (12) gebildet ist, und konfiguriert ist, ein Ausgangsmaterial (W) zu laden;
eine Produktpalette (36), die in der Y-Achsenrichtung zwischen dem ersten Arbeitsbereich (A1) und dem zweiten Arbeitsbereich (A2) beweglich ist, und konfiguriert ist, ein aus dem Ausgangsmaterial (W) erhaltenes Produkt (M) zu sammeln; und
eine Skelettpalette (38), die in der Y-Achsenrichtung zwischen einem dritten Arbeitsbereich (A3), der auf einer anderen Seite des ersten Arbeitsbereichs (A1) in der Y-Achsenrichtung gebildet ist, und dem zweiten Arbeitsbereich (A2) beweglich ist, und konfiguriert ist, ein Skelett (S) als Abfall aus der Verarbeitungsmaschine (12) zu sammeln;
**gekennzeichnet durch** umfassend:
einen Einzelstück-Aufnahmemechanismus (40), der über dem Ausgangsmaterial-Ladeteil (32) in dem zweiten Arbeitsbereich (A2) bereitgestellt ist, und konfiguriert ist, eines der Ausgangsmaterialien (W) aufzunehmen, die auf dem Ausgangsmaterial-Ladeteil (32) geladen sind;
eine endlose Übertragungskette (62), die entlang der Y-Achsenrichtung umlaufen kann und konfiguriert ist, die Produktpalette (36) in der Y-Achsenrichtung zwischen dem ersten Arbeitsbereich (A1) und dem zweiten Arbeitsbereich (A2) zu übertragen und die Skelettpalette (38) in der Y-Achsenrichtung zwischen dem dritten Arbeitsbereich (A3) und dem zweiten Arbeitsbereich (A2) zu übertragen;
eine Hebevorrichtung (76; 82), die in dem ersten Arbeitsbereich (A1) oder dem dritten Arbeitsbereich (A3) bereitgestellt ist und konfiguriert ist, die Produktpalette (36) oder die Skelettpalette (38) anzuheben und abzusenken; und
ein Paletten-Halteelement (78; 84), das in dem ersten Arbeitsbereich (A1) oder dem dritten Arbeitsbereich (A3) bereitgestellt ist und konfiguriert ist, die Produktpalette (36) oder die Skelettpalette (38) über der Übertragungskette (62) zu halten,
wobei das Ein-/Ausfördersystem (10) so konfiguriert ist, dass, wenn die Skelettpalette (38) in der Y-Achsenrichtung zwischen dem dritten Arbeitsbereich (A3) und dem zweiten Arbeitsbereich (A2) übertragen wird, die Produktpalette (36) von der Übertragungskette (62) entkoppelt ist und über der Übertragungskette (62) gehalten wird, oder so, dass, wenn die Produktpalette (36) in der Y-Achsenrichtung zwischen dem ersten Arbeitsbereich (A1) und dem zweiten Arbeitsbereich (A2) übertragen wird, die Skelettpalette (38) von der Übertragungskette (62) entkoppelt ist und über der Übertragungskette (62) gehalten wird.

2. Das Ein-/Ausfördersystem (10) nach Anspruch 1, wobei die Übertragungskette (62) mit einem ersten Eingriffsabschnitt (68) und einem zweiten Eingriffsabschnitt (70) mit einem Abstand dazwischen ausgestattet ist, und die Produktpalette (36) mit einem ersten Haken (72) ausgestattet ist, der konfiguriert ist, mit dem ersten Eingriffsabschnitt (68) der Übertragungskette (62) in Eingriff zu sein, und die Skelettpalette (38) mit einem zweiten Haken (74) ausgestattet ist, der konfiguriert ist, mit dem zweiten Eingriffsabschnitt (70) der Übertragungskette (62) in Eingriff zu sein.

3. Das Ein-/Ausfördersystem (10) nach Anspruch 1 oder 2, ferner umfassend:
einen beweglichen Tisch (48), der in der Y-Achsenrichtung inmitten des ersten Arbeitsbereichs (A1) und des zweiten Arbeitsbereichs (A2) und des dritten Arbeitsbereichs (A3) beweglich ist und konfiguriert ist, eines von dem Ausgangsmaterial (W) und dem Skelett (S) zu tragen; und
ein Anschlagelement (50), das konfiguriert ist, eine Bewegung des Skeletts (S) von dem dritten Arbeitsbereich (A3) zu einer Seite in der Y-Achsenrichtung einzustellen.

## Revendications

1. Système de transport d'entrée/sortie (10) comprenant :
une partie de chargement de matériau brut (32) pourvue dans une deuxième zone d'opération (A2) formée sur un côté d'une première zone d'opération (A1) dans une direction d'axe Y, qui est une direction horizontale sur un côté de transport d'entrée/sortie d'une machine de traitement (12), et configurée pour charger un matériau brut (W) ;
une palette de produits (36) mobile dans la direction de l'axe Y entre la première zone d'opération (A1) et la deuxième zone d'opération (A2), et configurée pour collecter un produit (M) dérivé du matériau brut (W) ; et
une palette squelette (38) mobile dans la direction de l'axe Y entre une troisième zone d'opération (A3) formée sur un autre côté de la première zone d'opération (A1) dans la direction de l'axe Y et la deuxième zone d'opération (A2), et configurée pour collecter un squelette (S) comme déchet de la machine de traitement (12) ;
**caractérisé en ce qu'**il comprend :
un mécanisme de saisie monobloc (40) pourvu au-dessus de la partie de chargement de matériau brut (32) dans la deuxième zone d'opération (A2), et configuré pour saisir un des matériaux bruts (W) chargés sur la partie de chargement de matériau brut (32) ;
une chaîne de transfert sans fin (62) pouvant circuler le long de la direction de l'axe Y, et configurée pour transférer la palette de produits (36) dans la direction de l'axe Y entre la première zone d'opération (A1) et la deuxième zone d'opération (A2) et pour transférer la palette squelette (38) dans la direction de l'axe Y entre la troisième zone d'opération (A3) et la deuxième zone d'opération (A2) ;
un élévateur (76 ; 82) pourvu dans la première zone d'opération (A1) ou la troisième zone d'opération (A3), et configuré pour élever et abaisser la palette de produits (36) ou la palette squelette (38) ; et
un élément de maintien de palette (78 ; 84) pourvu dans la première zone d'opération (A1) ou la troisième zone d'opération (A3), et configuré pour maintenir la palette de produit (36) ou la palette squelette (38) au-dessus de la chaîne de transfert (62),
le système de transport d'entrée/sortie (10) étant configuré de telle sorte que, quand la palette squelette (38) est transférée dans la direction de l'axe Y entre la troisième zone d'opération (A3) et la deuxième zone d'opération (A2), la palette de produits (36) est désengagée de la chaîne de transfert (62) et maintenue au-dessus de la chaîne de transfert (62), ou de telle sorte que quand la palette de produits (36) est transférée dans la direction de l'axe Y entre la première zone d'opération (A1) et la deuxième zone d'opération (A2), la palette squelette (38) est désengagée de la chaîne de transfert (62) et maintenue au-dessus de la chaîne de transfert (62).

2. Système de transport d'entrée/sortie (10) selon la revendication 1, dans lequel
la chaîne de transfert (62) est pourvue d'une première portion engagée (68) et d'une deuxième portion engagée (70) avec un espace entre elles, et
la palette de produit (36) est pourvue d'un premier crochet (72) configuré pour s'engager avec la première portion engagée (68) de la chaîne de transfert (62), et la palette squelette (38) est pourvue d'un deuxième crochet (74) configuré pour s'engager avec la deuxième portion engagée (70) de la chaîne de transfert (62).

3. Système de transport d'entrée/sortie (10) selon la revendication 1 ou 2, comprenant en outre :
une table mobile (48) mobile dans la direction de l'axe Y entre la première zone d'opération (A1) et la deuxième zone d'opération (A2) et la troisième zone d'opération (A3), et configurée pour supporter un élément parmi le matériau brut (W) et le squelette (S) ; et
un élément d'arrêt (50) configuré pour réguler le déplacement du squelette (S) depuis la troisième zone d'opération (A3) vers un côté dans la direction de l'axe Y.
